# EUROPÄISCHE PATENTSCHRIFT

(11) **EP 2 422 428 B1**
(45) Veröffentlichungstag und Bekanntmachung des Hinweises auf die Patenterteilung: **06.03.2013**
(21) Anmeldenummer: 10715529.3
(22) Anmeldetag: 20.04.2010
(51) Int. Cl.: H02K 1/28

(54) **Rotierende elektrische Maschine, insbesondere doppelt gespeiste Asynchronmaschine im Leistungsbereich zwischen 20 MVA und über 500 MVA**
Rotating electric machine, in particular double-feed asynchronous machine in the power range between 20 MVA and over 500 MVA
Machine électrique tournante, notamment machine asynchrone à double alimentation dans une région de puissance comprise entre 20 MVA et au dessus de 500 MVA

(30) Priorität: 24.04.2009 DE 102009018549; 20.08.2009 DE 102009037991
(43) Veröffentlichungstag der Anmeldung: 29.02.2012
(73) Patentinhaber: Alstom Hydro France, 92300 Levallois Perret (FR)
(72) Erfinder: SCHWERY, Alexander, CH-5024 Küttigen (CH); CIFYILDIZ, Serdar, CH-8400 Winterthur (CH); WALSER, Hanspeter, CH-4712 Laupersdorf (CH); MEYER, Bruno, CH-5524 Niederwil (CH); OKAI, Ricardo, CH-5442 Fislisbach (CH)
(74) Vertreter: Dimper, Dieter
(86) Internationale Anmeldenummer: PCT/EP2010/055153
(87) Internationale Veröffentlichungsnummer: WO 2010/122000

(56) Entgegenhaltungen:
- EP-A2- 0 414 129
- WO-A1-80/01444
- DE-A1- 3 907 860
- JP-A- 60 035 931
- JP-A- 61 058 439

## Beschreibung

### TECHNISCHES GEBIET

Die vorliegende Erfindung bezieht sich auf das Gebiet der Erzeugung elektrischer Energie Sie betrifft eine rotierende elektrische Maschine, insbesondere doppelt gespeiste Asynchronmaschine im Leistungsbereich zwischen 20 MVA und über 500 MVA, gemäss dem Oberbegriff des Anspruchs 1. Eine solche elektrische Maschine ist aus der JP 60 035 931 bekannt.

### STAND DER TECHNIK

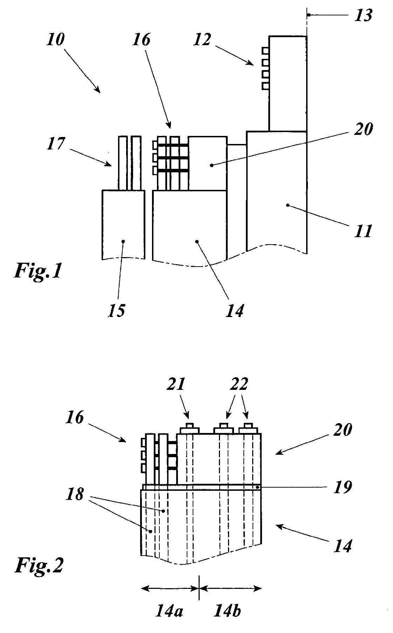

Doppelt gespeiste Asynchronmaschinen im Leistungsbereich von 20 MVA bis über 500 MVA können zur drehzahlvariablen Energieproduktion eingesetzt werden. Diese Maschinen zeichnen sich durch eine verteilte Dreiphasenwicklung auf dem Rotor aus. Die Rotorwicklung besteht aus einzelnen Stäben, welche im Rotorblechpaket in Nuten eingebettet sind. Im Wickelkopf werden die einzelnen Stäbe zu einer Wicklung verschaltet. Die Einspeisung der Ströme erfolgt über mindestens drei Schleifringe, welche am Ende der Maschine an der Welle befestigt sind. Ein Ausschnitt aus einer solchen Maschine ist in Fig. 1 in stark vereinfachter Form wiedergegeben. Die in Fig. 1 dargestellte Asynchronmaschine 10 hat eine Maschinenachse 13. Um diese Achse 13 drehbar ist ein Zentralkörper 11 mit einer Welle, auf der die Schleifringe 12 angeordnet sind. Um den Zentralkörper 11 herum ist der Rotorblechkörper 14 angeordnet, an den unterhalb eines Wickelkopfes 16 der Rotorwicklung ein Hilfsrim 20 anschliesst. Der Rotorblechkörper 14 ist von einem Statorblechkörper 15 konzentrisch umgeben, in dem eine Statorwicklung untergebracht ist, die am Ende des Körpers mit einem Statorwickelkopf 17 nach aussen vorsteht. Der Rotorblechkörper 14 ist in Fig. 2 im Ausschnitt vergrössert wiedergegeben.

Da die Rotoren von doppelt gespeisten Asynchronmaschinen eine Rotorwicklung 18 tragen, muss diese gegen die auftretenden Zentrifugalkräfte gesichert werden. Das Rotorblechpaket dient zum einen der Aufnahme dieser Kräfte und definiert zugleich den Weg des magnetischen Flusses. Das Hilfsrim 20 dient der Aufnahme der Zentrifugalkräfte die auf den Rotorwickelkopf 16 einwirken. Das Hilfsrim 20, wie auch der Rotorblechkörper 14, bestehen aus geschichteten Blechen, welche in axialer Richtung zu einem Verbund gepresst werden. Es ist bekannt, hierbei eine Pressplatte 19 einzusetzen, die den durch Bolzen 21, 22 aufgebrachten Pressdruck auf die Bleche des Rotorblechpakets verteilt (siehe z.B. die DE-A1-195 13 457 oder die DE-A1-1 2007 000 668).

Verschiedene Ansprüche werden an den Rotorblechkörper 14 gestellt. In Fig. 2 ist die prinzipielle Unterteilung in einen elektrischen Bereich 14a und einen mechanischen Bereich 14b dargestellt. Einerseits soll in den Zähnen genügend axialer Druck zwischen den Schichten der Bleche bestehen um die Homogenität des Körpers zu garantieren. Um Vibrationen zu vermeiden, dürfen sich die Schichten nicht lockern, da Relativbewegungen zwischen den Zähnen und der Rotorwicklung 18 die Isolation beschädigen könnten. Andererseits darf der Druck nicht zu hoch sein, um Schaden an den Isolationsschichten zwischen den einzelnen Blechen zu vermeiden, da solche Schäden zu erhöhten Verlusten führen würden. Im mechanischen Bereich 14b des Rims soll der axiale Druck höher sein, als im elektrischen Bereich 14a, um eine gewisse Reibkraft zwischen den Blechen zu erhalten.

Die EP 0 414 129 offenbart einerotierende elektrische Maschine mit einem Rotor, der ein Blechkörper und Pressplatten aufweisst. Die Pressplatten sind radial in eine separate innere Pressplatte und eine separate äussere Pressplatte unterteilt.

Die US 725 773 offenbart einen Rotor mit einem Blechkörper und Pressplatten und vorspringenden Polen.

### DARSTELLUNG DER ERFINDUNG

Es ist daher Aufgabe der Erfindung, eine elektrische Maschine der eingangs genannten Art so zu verbessern, dass die unterschiedlichen Anforderungen an die Verspannung des Rotorblechkörpers in den unterschiedlichen Bereichen erheblich besser erfüllt werden können.

Die Aufgabe wird durch die Gesamtheit der Merkmale des Anspruchs 1 gelöst. Wichtig für die erfindungsgemässe Lösung ist, dass die Pressplatte entsprechend der radialen Unterteilung des Rotorblechkörpers radial unterteilt ist in eine separate innere Pressplatte und eine separate äussere Pressplatte. Durch die Auftrennung der Pressplatte entsprechend den unterschiedlichen Bereichen des Rotorblechkörpers können die auf den Rotorblechkörper wirkenden Kräfte getrennt optimiert werden.

Eine erste Ausgestaltung der Erfindung ist dadurch gekennzeichnet, dass die innere und äussere Pressplatte miteinander lösbar verbunden sind. Hierdurch können die an der äusseren Pressplatte angreifenden Zentrifugalkräfte wirksam aufgefangen werden.

Eine andere Ausgestaltung zeichnet sich dadurch aus, dass die innere und äussere Pressplatte derart aneinander grenzen und miteinander verbunden sind, dass die äussere Pressplatte gegenüber der inneren Pressplatte gekippt werden kann.

Eine weitere Ausgestaltung der Erfindung ist dadurch gekennzeichnet, dass zumindest ein Teil der Scherbolzen als massive Bolzen ausgeführt sind.

Es ist aber auch denkbar und im Hinblick auf die Verwendung unterschiedlicher Materialien von Vorteil, wenn zumindest ein Teil der Scherbolzen als mehrteilige Bolzen ausgeführt sind, die eine äussere Röhre und einen durch die Röhre hindurch verlaufenden zentralen Zugbolzen umfassen.

Insbesondere kann in diesem Fall die äussere Röhre in axialer Richtung in mehrere Teilstücke unterteilt sein, um besser die geforderten Toleranzen einhalten zu können und den Aufbau- und Montageprozess der Maschine zu erleichtern.

Dabei ist es von Vorteil, wenn die Teilstücke an den Enden jeweils mit zueinander passenden Mitteln zur konzentrischen Ausrichtung der Teilstücke untereinander ausgestattet sind.

Eine andere Ausgestaltung der Erfindung zeichnet sich dadurch aus, dass die Pressplatte entsprechend der radialen Unterteilung des Rotorblechkörpers radial unterteilt ist in eine separate innere Pressplatte und eine separate äussere Pressplatte, und dass die innere und äussere Pressplatte miteinander lösbar verbunden sind.

Eine Weiterbildung dieser Ausgestaltung ist dadurch gekennzeichnet, dass die äussere Pressplatte entlang dem Umfang in einzelne gleichartige Umfangsteile unterteilt ist, dass die Umfangsteile der äusseren Pressplatte jeweils mit einer geraden Kippkante an die innere Pressplatte angrenzen, und dass die Umfangsteile der äusseren Pressplatte jeweils mittels Hammerklauen in die innere Pressplatte eingehängt sind.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer stark vereinfachten Darstellung einen Ausschnitt aus einer Asynchronmaschine, wie sie zur Anwendung der Erfindung geeignet ist;
- Fig. 2: in einem vergrösserten Ausschnitt den Aufbau des Rotorblechkörpers der Maschine aus Fig. 1 einschliesslich einer zum Verspannen des Rotorblechkörpers eingesetzten Pressplatte mit verschiedenen Bolzen gemäss einem Ausführungsbeispiel der Erfindung;
- Fig. 3: in zwei Teilfiguren 3(a) und 3(b) zwei unterschiedliche Arten von Bolzen für den elektrischen Bereich des Rotorblechkörpers;
- Fig. 4: den prinzipiellen Aufbau eines mehrteiligen Scherbolzens;
- Fig. 5: in verschiedenen Teilfiguren 5(a) bis 5(d) verschieden Arten von Anschlussmitteln zur konzentrischen Ausrichten der Teilstücke eines Scherbolzens mit unterteilter Röhre; und
- Fig. 6: in der Draufsicht in axialer Richtung einen Sektor einer Pressplatte zum Verspannen des Rotorblechkörpers gemäss einem weiteren Ausführungsbeispiel der Erfindung.

### WEGE ZUR AUSFÜHRUNG DER ERFINDUNG

Gemäss Fig. 2 werden zum axialen Verspannen des Rotorblechkörpers 14 verschiedene Arten von Bolzen eingesetzt, nämlich Scherbolzen 22 und Zugbolzen 21.

Die Scher- und Zugbolzen 22 bzw. 21 dienen dazu, den gewünschten Druck im Rotorblechkörper 14 aufzubauen. Um den Druck im Zahnbereich bzw. elektrischen Bereich 14a aufzubauen, können zwei Grundprinzipien zur Anwendung kommen:

### Zugbolzen:

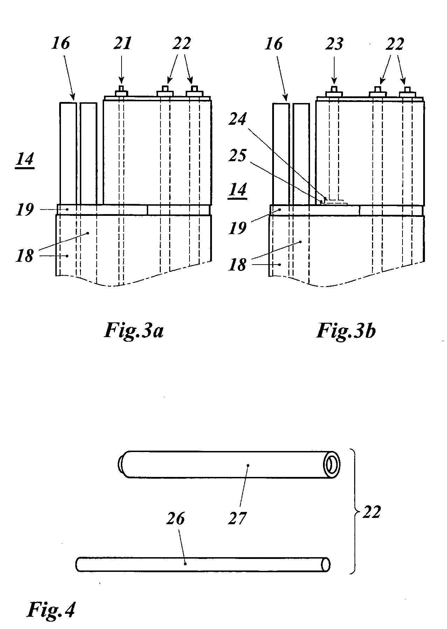

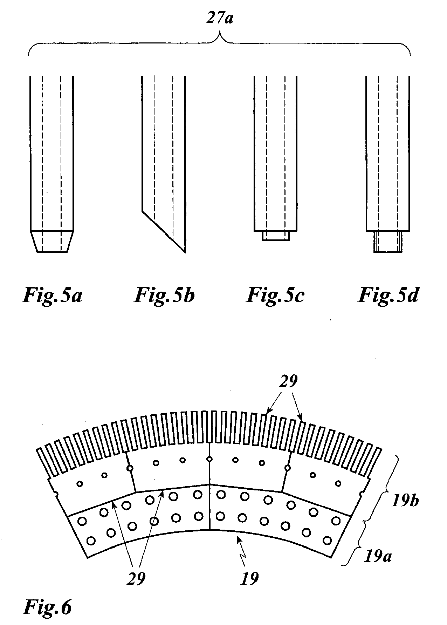

Die Zugbolzen (21 in Fig. 2 und Fig. 3(a)) verlaufen über die gesamte axiale Länge des Rotorblechkörpers 14. Da sich die Zugbolzen 21 im magnetisch aktiven Teil (hohe magnetische Induktion) des Blechkörpers befinden, müssen sie elektrisch isoliert sein. Um eine mechanische Beanspruchung der Isolation zu vermeiden, dürfen diese Bolzen jedoch nicht auf Scherung beansprucht werden. Über die Spannung im Zugbolzen 21 kann der Druck auf die Pressplatte 19 und damit der Druck in den Zähnen (siehe 29 in Fig. 6) "eingestellt" werden.

### Druckbolzen im Hilfsrim 20:

Druckbolzen 23 im Hilfsrim 20 können anstelle der durchgängigen Zugbolzen 21 verwendet werden (siehe Fig. 3(b)). Wird ein Druckbolzen 23 im Hilfsrim 20 verwendet, geschieht die Druckübertragung auf den Zahnbereich des Rotorblechkörpers über einen Bolzen, der im Hilfsrim 20 untergebracht ist. Zwischen Druckbolzen 23 und Pressplatte 19 befinden sich dabei eine Druckplatte 25 und eine Mutter 24. Durch die Einschraubtiefe des Druckbolzens 23 in der Mutter 24 kann der Druck auf die Pressplatte 19 und somit auf die Zähne "eingestellt" werden.

Die Scherbolzen 22 übernehmen demgegenüber zwei Aufgaben: Zum einen dienen sie dem Aufbringen des axialen Drucks im mechanischen Bereich 14b des Rotorblechkörpers 14. Zum Anderen müssen sie die zwischen den Blechen des Rotorblechkörpers 14 auftretenden Scherkräfte aufnehmen. Aus diesem Grund können die Scherbolzen 22 nicht isoliert sein und befinden sich konsequenter Weise am inneren Rand, im magnetisch schwach genutzten Teil des mechanischen Bereichs 14b.

Die zu übertragenden Scherkräfte definieren die Materialeigenschaften und den (äusseren) Bolzendurchmesser der Scherbolzen 22. Der axiale Druck im Rotorblechkörper 14 wird über die Verlängerung der Bolzen eingestellt. Um trotz Setzungsphänomenen des Rotorblechkörpers 14 einen genügenden Restdruck im Rotorblechkörper 14 gewährleisten zu können, wird eine gewisse minimale Verlängerung im Anfangszustand benötigt. Diese kann bei grossen Bolzendurchmessern zu sehr hohen Drücken führen.

Es ist deshalb vorteilhaft, gemäss Fig. 4 anstelle von massiven Bolzen dickwandige Röhren 27 zusammen mit zentralen Zugbolzen 26 einzusetzen, welche in der Bohrung der Röhren 27 verlaufen. Die zu übertragenden Scherkräfte definieren die Materialeigenschaften und die Rohrdurchmesser. Dabei werden die Scherkräfte von den Röhren 27 übernommen. Der zu erreichende Druck auf dem Rotorblechkörper wird über die Verlängerung der zentralen Zugbolzen 26 eingestellt. Da die Durchmesser dieser Stangen kleiner sind, als bei den massiven Bolzen, können bei derselben Verlängerung ausreichend grosse Drücke erreicht werden.

Ein gewisser Nachteil der Lösung mit Röhren 27 und zentralen Zugbolzen 26 besteht in der hohen Anforderung an die Genauigkeit der Bohrungen in den Röhren 27. Insbesondere bei längeren Maschinen ist es sehr aufwändig, die geforderten engen Toleranzen zu erreichen. Dieselbe Idee lässt sich aber auch mit axial geteilten Röhren 27 realisieren. Dabei wird die Röhre 27 in mehrere Teilstücke (27a in Fig. 5) geteilt, welche sich wesentlich leichter mit den geforderten Toleranzen herstellen lassen. Des Weiteren erleichtert diese Ausführungsvariante den Aufbau- und Montageprozess der Maschine. Damit die einzelnen Teilstücke 27a auf einfache Weise zueinander konzentrisch ausgerichtet sind, können die Enden gemäss Fig. 5 mit Gewinden versehen (Fig. 5(d), versetzt (Fig. 5(c)) oder abgeschrägt (Fig. 5(b) ausgeführt werden, oder sich konisch verjüngen (Fig. 5(a)), wobei auch eine Kombination dieser Lösungen möglich ist.

Die sich widersprechenden Anforderungen an den elektrischen und mechanischen Teil 14a bzw. 14b des Statorblechkörpers 14 können über die Ausgestaltung der Bolzen hinaus durch eine radial getrennte Pressplatte 19 noch besser erreicht werden. Fig. 6 zeigt eine schematische Darstellung eines Ausführungsbeispiels der Pressplatte 19 in der Draufsicht in axialer Richtung. Die Pressplatte 19 ist sowohl in radialer Richtung als auch teilweise in Umfangsrichtung unterteilt in eine separate innere Pressplatte 19a und eine separate äussere Pressplatte 19b. Die äussere Pressplatte 19b ist ihrerseits in Umfangsrichtung unterteilt in einzelne Umfangsteile. Durch die der Aufteilung des Rotorblechkörpers 14 in einen mechanischen Bereich 14b und einen elektrischen Bereich 14a folgende Unterteilung der Pressplatte 19 in einen inneren und mehrere äussere Teile 19a bzw. 19b kann für die unterschiedlichen Bereiche des Rotorblechkörpers 14 die Art und Weise der axialen Verspannung getrennt optimiert werden.

Um ein gezieltes Kippen der äusseren Pressplatte 19b erreichen zu können, muss die Trennung zwischen der äusseren und inneren Pressplatte 19a bzw. 19b eine stückweise gerade Kippkante 28 aufweisen. Durch die radiale Trennung der Pressplatte 19 ist es möglich, unterschiedliche Drücke im elektrischen und mechanischen Bereich 14a bzw. 14b des Rotorblechkörpers 14 zu erreichen.

### BEZUGSZEICHENLISTE

- 10: Asynchronmaschine
- 11: Zentralkörper (mit Welle)
- 12: Schleifring
- 13: Achse
- 14: Rotorblechkörper
- 14a: elektrischer Bereich
- 14b: mechanischer Bereich
- 15: Statorblechkörper
- 16: Rotorwickelkopf
- 17: Statorwickelkopf
- 18: Rotorwicklung
- 19: Pressplatte
- 19a: innere Pressplatte
- 19b: äussere Pressplatte
- 20: Hilfsrim
- 21: Zugbolzen
- 22: Scherbolzen
- 23: Druckbolzen
- 24: Mutter
- 25: Druckplatte
- 26: zentraler Zugbolzen
- 27: Röhre
- 27a: Teilstück
- 28: Kippkante
- 29: Zahn

## Patentansprüche

1. Rotierende elektrische Maschine, insbesondere doppelt gespeiste Asynchronmaschine (10) im Leistungsbereich zwischen 20 MVA und über 500 MVA, welche einen um eine Achse (13) drehenden, von einem Stator (15, 17) konzentrisch umgebenen Rotor (11, 14) umfasst, wobei der Rotor (11, 14) einen aus geschichteten und in axialer Richtung zu einem Verbund verpressten Blechen aufgebauten Rotorblechkörper (14) aufweist, der in radialer Richtung in einen inneren mechanischen Bereich (14b) und einen äusseren elektrischen Bereich (14a) unterteilt ist, und in dem im elektrischen Bereich (14a) eine Rotorwicklung (18) untergebracht ist, wobei der Rotorblechkörper (14) im mechanischen Bereich (14b) mittels in axialer Richtung durch den Rotorblechkörper (14) hindurch gehender Scherbolzen (22) und im elektrischen Bereich (14a) mittels weiterer Bolzen (21 bzw. 23) verpresst ist,
**dadurch gekennzeichnet, dass** zumindest ein Teil der Scherbolzen (22) als mehrteilige Bolzen ausgeführt sind, die eine äussere Röhre (27) und einen durch die Röhre (27) hindurch verlaufenden zentralen Zugbolzen (26) umfassen.

2. Rotierende elektrische Maschine nach Anspruch 1, **dadurch gekennzeichnet, dass** die weiteren Bolzen als in axialer Richtung durch den Rotorblechkörper (14) hindurch gehende Zugbolzen (21) ausgebildet sind.

3. Rotierende elektrische Maschine nach Anspruch 1, **dadurch gekennzeichnet, dass** zur Verteilung des axialen Pressdrucks auf den Rotorblechkörper (14) an den Enden des Körpers jeweils eine Pressplatte (19) vorgesehen ist, und dass die weiteren Bolzen als von aussen gegen die Pressplatten (19) drückende Druckbolzen (23) ausgebildet sind.

4. Rotierende elektrische Maschine nach Anspruch 3, **dadurch gekennzeichnet, dass** ausserhalb der Pressplatten (19) ein Hilfsrim (20) zur Abstützung des Rotorwickelkopfes (16) angeordnet ist, und dass die Druckbolzen (23) im Hilfsrim (20) untergebracht sind.

5. Rotierende elektrische Maschine nach einem der Ansprüche 1 bis 4, **dadurch gekennzeichnet, dass** zumindest ein Teil der Scherbolzen (22) als massive Bolzen ausgeführt sind.

6. Rotierende elektrische Maschine nach Anspruch 1, **dadurch gekennzeichnet, dass** die äussere Röhre (27) in axialer Richtung in mehrere Teilstücke (27a) unterteilt ist.

7. Rotierende elektrische Maschine nach Anspruch 6, **dadurch gekennzeichnet, dass** die Teilstücke (27a) an den Enden jeweils mit zueinander passenden Mitteln zur konzentrischen Ausrichtung der Teilstücke untereinander ausgestattet sind.

8. Rotierende elektrische Maschine nach einem der Ansprüche 1 bis 7, **dadurch gekennzeichnet, dass** die Pressplatte (19) entsprechend der radialen Unterteilung des Rotorblechkörpers (14) radial unterteilt ist in eine separate innere Pressplatte (19a) und eine separate äussere Pressplatte (19b), und dass die innere und äussere Pressplatte (19a bzw. 19b) miteinander lösbar verbunden sind.

9. Rotierende elektrische Maschine nach Anspruch 8, **dadurch gekennzeichnet, dass** die äussere Pressplatte (19b) entlang dem Umfang in einzelne gleichartige Umfangsteile unterteilt ist, und dass die Umfangsteile der äusseren Pressplatte (19b) jeweils mit einer geraden Kippkante (28) an die innere Pressplatte (19a) angrenzen.

## Claims

1. A rotating electrical machine, especially a double-fed asynchronous machine (10) in the power range from 20 MVA and above 500 MVA, which comprises a rotor (11, 14) rotating about an axis (13) and being concentrically surrounded by a stator (15, 17), whereby the rotor (11, 14) has a rotor lamination stack (14) made up of sheets, which are pressed into a composite assembly in the axial direction, said rotor lamination stack (14) being subdivided in the radial direction into an inner mechanical part (14b) and an outer electrical part (14a), and accommodating a rotor winding (18) within said electrical part (14a), wherein the rotor lamination stack (14) is pressed in the mechanical part (14b) by means of shear bolts (22) axially reaching through said rotor lamination stack (14) and in the electrical part (14a) by means of further bolts (21 and 23 respectively), **characterized in that** at least some of the shear bolts (22) are designed as multi-part bolts which comprise an outer tube (27) and a central tensioning bolt (26) running through the tube (27).

2. The rotating electrical machine as claimed in claim 1, **characterized in that** the further bolts are designed as tensioning bolts (21) passing through the rotor lamination stack (14) in the axial direction.

3. The rotating electrical machine as claimed in claim 1, **characterized in that** a pressing plate (19) is provided at each end of the body in order to distribute the axial compression force on the rotor lamination stack (14), and that the further bolts are designed as forcing bolts (23) which press against the pressing plates (19) from the outside.

4. The rotating electrical machine as claimed in claim 3, **characterized in that** an auxiliary rim (20) for supporting the rotor winding head (16) is arranged outside the pressing plates (19), and that the forcing bolts (23) are accommodated in the auxiliary rim (20).

5. The rotating electrical machine as claimed in one of claims 1 to 4, **characterized in that** at least some of the shear bolts (22) are designed as solid bolts.

6. The rotating electrical machine as claimed in claim 1, **characterized in that** the outer tube (27) is subdivided in the axial direction into a plurality of subsections (27a).

7. The rotating electrical machine as claimed in claim 6, **characterized in that** the subsections (27a) are equipped at each end with matching means for concentric alignment of the subsections with one another.

8. The rotating electrical machine as claimed in one of claims 1 to 7, **characterized in that** the pressing plate (19) is subdivided radially into a separate inner pressing plate (19a) and a separate outer pressing plate (19b) corresponding to the radial subdivision of the rotor lamination stack (14), and that the inner and outer pressing plates (19a and 19b respectively) are releasably connected to one another.

9. The rotating electrical machine as claimed in claim 8, **characterized in that** the outer pressing plate (19b) is subdivided along the circumference into individual similar circumferential sections, and that the circumferential sections of the outer pressing plate (19b) each abut the inner pressing plate (19a) with a straight tilting edge (28).

## Revendications

1. Machine électrique tournante, notamment machine asynchrone (10) à double alimentation dans une région de puissance comprise entre 20 MVA et au-dessus de 500 MVA, comprenant un rotor (11, 14) tournant autour d'un axe (13) et concentriquement entouré par un stator (15, 17), le rotor (11, 14) comprenant un corps de tôle de rotor (14) composé de tôles revêtues et comprimées dans la direction axiale pour former un assemblage subdivisé dans la direction radiale en une région mécanique intérieure (14b) et en une région électrique extérieure (14a) et placé dans la bobine de rotor (18) dans la région électrique (14a), le corps de tôle de rotor (14) étant comprimé dans la région mécanique (14b) à l'aide de boulons cisaillants (22) traversant le corps de tôle de rotor (14) dans la direction axiale et dans la région électrique (14a) à l'aide de boulons (21 et/ou 23) supplémentaires, **caractérisée en ce qu'**au moins une partie des boulons cisaillants (22) prend la forme de boulons en plusieurs parties comprenant un tube extérieur (27) et un boulon-traction (26) s'étendant à travers le tube (27).

2. Machine électrique tournante selon la revendication 1, **caractérisée en ce que** les boulons supplémentaires prennent la forme de boulons-traction (21) traversant le corps de tôle de rotor (14) dans la direction axiale.

3. Machine électrique tournante selon la revendication 1, **caractérisée en ce qu'**une plaque de compression (19) est prévue pour répartir la pression par compression axiale sur le corps de tôle de rotor (14), respectivement au niveau des extrémités du corps, et que les boulons supplémentaires prennent la forme de boulons de pression (23) appuyant de l'extérieur contre les plaques de compression (19).

4. Machine électrique tournante selon la revendication 3, **caractérisée en ce qu'**un bord auxiliaire (20) est disposé à l'extérieur des plaques de compression (19) pour maintenir la tête de bobine de rotor (16) et que les boulons de pression (23) sont placés dans le bord auxiliaire (20).

5. Machine électrique tournante selon l'une quelconque des revendications 1 à 4, **caractérisée en ce qu'**au moins une partie des boulons cisaillants (22) prend la forme de boulons massifs.

6. Machine électrique tournante selon la revendication 1, **caractérisée en ce que** le tube extérieur (27) est subdivisé en plusieurs pièces (27a) dans la direction axiale.

7. Machine électrique tournante selon la revendication 6, **caractérisée en ce que** les pièces (27a) sont respectivement équipées au niveau des extrémités de moyens adaptés les uns aux autres servants à l'alignement concentrique des pièces les unes par rapport aux autres.

8. Machine électrique tournante selon l'une quelconque des revendications 1 à 7, **caractérisée en ce que** la plaque de compression (19) est subdivisée dans le plan radial, en fonction de la subdivision radiale du corps de tôle de rotor (14), en une plaque de compression intérieure (19a) séparée et en une plaque de compression extérieure (19b) séparée et que les plaques de compression intérieure et extérieure (19a et/ou 19b) sont reliées l'une avec l'autre de façon amovible.

9. Machine électrique tournante selon la revendication 8, **caractérisée en ce que** la plaque de compression extérieure (19b) est subdivisée le long de la périphérie en parties périphériques similaires individuelles et que les parties périphériques de la plaque de compression extérieure (19b) reposent respectivement contre la plaque de compression intérieure (19a) par le biais d'un bord basculant (28) droit.
